# EUROPEAN PATENT APPLICATION

(11) **EP 4 394 976 A1**
(43) Date of publication of application: **03.07.2024**
(21) Application number: 23854521.4
(22) Date of filing: 18.08.2023
(51) Int. Cl.: H01M 10/0525, H01M 4/505, H01M 4/131

(54) **LITHIUM-RICH MANGANESE-BASED POSITIVE ELECTRODE MATERIAL, AND PREPARATION METHOD THEREFOR AND USE THEREOF**

(30) Priority: 19.08.2022 CN 202210998592
(71) Applicant: Tianjin B&M Science And Technology Co., Ltd., Tianjin 300384 (CN)
(72) Inventor: LI, Honglei, Tianjin 300384 (CN); CHEN, Zhiyu, Tianjin 300384 (CN); JI, Changyin, Tianjin 300384 (CN); LV, Fei, Tianjin 300384 (CN); XU, Ning, Tianjin 300384 (CN)
(74) Representative: Sackin, Robert
(86) International application number: PCT/CN2023/113757
(87) International publication number: WO 2024/037625

(57) **Abstract**

The present application relates to a lithium-rich manganese-based cathode material, a preparation method thereof, and an application thereof. The surface of the lithium-rich manganese-based cathode material includes oxygen vacancies. The molecular formula of the lithium-rich manganese-based cathode material is Li₁₊ₐMn_{b}M_{c}O₂, wherein Mn includes Mn⁴⁺ and Mn³⁺, a molar percentage of Mn³⁺ in Mn as a whole is in a range of 20% to 60%, M includes one or more of Ni, Co, Al, Mo, Ti, or Zr, 0<a≤0.25, b≥0.5, and 0.8≤a+b+c≤1.2.

## Description

### CROSS-REFERENCE TO RELATED APPLICATION

This application claims priority to Chinese patent application No. 202210998592.5, filed on August 19, 2022, and titled "LITHIUM-RICH MANGANESE-BASED CATHODE MATERIAL AND PREPARATION METHOD THEREOF AND APPLICATION THEREOF", the contents of which is hereby incorporated by reference in its entirety.

### TECHNICAL FIELD

The present invention relates to the field of lithium battery materials, and specifically to a lithium-rich manganese-based cathode material, a preparation method thereof, and an application thereof.

### BACKGROUND

In recent years, the rapid development of new energy vehicles has put forward higher requirements for the energy density of lithium-ion secondary batteries. Cathode materials are a key factor in achieving high energy density of lithium-ion secondary batteries. However, currently matured cathode materials such as lithium cobalt oxide, spinel lithium manganese oxide, lithium iron phosphate, and lithium nickel cobalt manganese oxide ternary materials struggle to meet the requirements for high specific energy of lithium-ion secondary batteries in electric vehicles and other fields. Therefore, there is an urgent need for new cathode materials with low cost, high energy density, and good safety.

Lithium-rich manganese-based layered cathode materials have a high specific capacity exceeding 250 mAh/g and a high operating voltage of 4.8 V, making them cost-effective and attracting significant attentions from researchers. However, there are still challenges such as low initial coulombic efficiency, severe capacity and voltage decay, and poor rate performance, hindering the industrial application of the lithium-rich manganese-based layered cathode materials in lithium-ion secondary batteries. The low initial coulombic efficiency and severe voltage decay of lithium-rich manganese-based layered cathode materials are mainly due to the irreversible oxygen release during the initial cycle, which on the one hand causes a significant irreversible capacity loss, and on the other hand reduces the binding energy between transition metal ions and oxygen, inducing the migration and valence state change of the transition metal ions, and thus leading to irreversible phase transitions and voltage decay.

Currently, methods employed to improve the electrochemical performance of lithium-rich manganese-based layered cathode materials often lead to structural damage while improving the initial coulombic efficiency and rate performance of lithium-rich manganese-based layered cathode materials. This structural damage can result in precipitation and loss of lithium.

### SUMMARY

In view of this, the present invention provides a lithium-rich manganese-based cathode material, a preparation method thereof, and an application thereof, which can self-regulate oxygen vacancies and improve the first coulombic efficiency while suppressing voltage decay during battery cycling.

An aspect of the present invention provides a lithium-rich manganese-based cathode material. The surface of the lithium-rich manganese-based cathode material includes oxygen vacancies. The molecular formula of the lithium-rich manganese-based cathode material is Li₁₊ₐMn_{b}M_{c}O₂, wherein Mn includes Mn⁴⁺ and Mn³⁺, and a molar percentage of Mn³⁺ in Mn as a whole is in a range of 20% to 60%; M includes one or more of Ni, Co, Al, Mo, Ti, or Zr; 0<a≤0.25; b≥0.5; and 0.8≤a+b+c≤1.2.

In some embodiments, the lithium-rich manganese-based cathode material is a layered material and includes a stacking-fault structure with a thickness of less than or equal to 50 nm.

In some embodiments, the lithium-rich manganese-based cathode material satisfies at least one of the following conditions (1) to (3):
(1) the particle size D50 is in a range of 3 µm to 15 µm;
(2) the specific surface area is in a range of 0.3 m²/g to 6.0 m²/g; or
(3) the tap density is in a range of 1.5g/cm ³ to 2.8 g/cm ³.

In some embodiments, the lithium-rich manganese-based cathode material includes secondary particles, and the secondary particles are formed by aggregation of primary particles of the lithium-rich manganese-based cathode material.

In some embodiments, the particle size D50 of the primary particles of the lithium-rich manganese-based cathode material is in a range of 50 nm to 500 nm.

An aspect of the present invention further provides a method for preparing the lithium-rich manganese-based cathode material as described above, and the method includes the following steps of:
mixing a lithium source, a manganese source, an M source, and an organic material to prepare a mixed powder, wherein the organic material is adapted to provide a nitrogen source and/or a carbon source; and
sintering the mixed powder and then cooling.

In some embodiments, the organic material includes one or more of sucrose, glucose, chitosan, urea, or citric acid.

In some embodiments, the mass percentage of the organic material in the mixed powder is in a range of 0.5 % to 10 %.

In some embodiments, at least one of the following features (1) to (3) is provided:
(1) The lithium source includes one or more of LiOH, Li₂CO₃, Li₂SO₄, LiCl, or LiNO₃;
(2) The manganese source includes one or more of MnO, MnO₂, Mn₃O₄, MnCO₃, or MnSO₄;
(3) The M source is one or more of an oxide, a hydroxide, a carbonate, or a sulfate, containing metal element M.

In some embodiments, the M source is selected from the group consisting of nickel oxide, nickel hydroxide, nickel carbonate, nickel sulfate, cobalt oxide, cobalt hydroxide, cobalt carbonate, cobalt sulfate, aluminum trioxide, aluminum hydroxide, aluminum carbonate, aluminum sulfate, molybdenum oxide, molybdenum hydroxide, molybdenum carbonate, molybdenum sulfate, titanium oxide, titanium hydroxide , titanium sulfate, zirconium oxide, zirconium hydroxide, zirconium carbonate, zirconium sulfate, and combinations thereof.

In some embodiments, the step of sintering is staged sintering with the following specific process.

In an oxygen-containing atmosphere, control the air inflow rate to be in the range of 0.5 m³/h to 5 m³/h, raise the temperature at a heating rate ranging from 1.0 °C/min to 5.0 °C/min to a value ranging from 300 °C to 600 °C, and hold the temperature for 2 hours (h) to 8 h; and then control the air inflow rate to be in the range of 0.5 m³/h to 5 m³/h, raise the temperature at a heating rate ranging from 1.0 °C/min to 5.0 °C/min to a value ranging from 800 °C to 1000 °C, and hold the temperature for 10 h to 20 h.

In some embodiments, the step of cooling is performed by air cooling or liquid nitrogen quenching.

Optionally, the air inflow rate of the air cooling is in a range of 5 m³/h to 30 m³/h.

In some embodiments, the step of preparing the mixed powder includes dissolving the lithium source, the manganese source, the M source, and the organic material in a solvent and drying.

Optionally, the step of drying is performed by spray drying, and in the spray drying, the liquid inflow rate is in a range of 0.5 L/min to 5 L/min, the air inlet temperature is in a range of 150 °C to 300 °C, the air outlet temperature is in a range of 80 °C to 200 °C, and the carrier gas flow rate is in a range of 20 L/min to 200 L/min.

Another aspect of the present invention further provides a positive electrode, including a positive electrode current collector and a cathode active material layer disposed on one or both sides of the positive electrode current collector. The cathode active material in the cathode active material layer is the above-described lithium-rich manganese-based cathode material.

Another aspect of the present invention further provides a lithium secondary battery, including the above-described positive electrode.

Another aspect of the present invention further provides an electrical device, including the above-described lithium secondary battery.

### BRIEF DESCRIPTION OF THE DRAWINGS

In order to illustrate the embodiments of the present invention or the technical solution in the prior art more clearly, the drawings to be referred in description of the embodiments or the prior art will be described briefly. Apparently, the following described drawings are merely for some embodiments of the present invention, and other drawings can be derived by those of ordinary skill in the art without any creative effort.
FIG. 1 is a graph showing an XRD pattern of the lithium-rich manganese-based layered cathode material prepared in Example 1 of the present invention.
FIG. 2 shows a TEM image of the lithium-rich manganese-based layered cathode material prepared in Example 1 of the present invention.
FIG. 3 shows an XPS image of element Mn on the surfaces of the lithium-rich manganese-based layered cathode materials prepared in Example 1 and Comparative Example 1.
FIG. 4 shows a TEM image of the lithium-rich manganese-based layered cathode material prepared in Comparative Example 3 of the present invention.
FIG. 5 is a graph showing rate performance of the lithium-ion secondary batteries including the lithium-rich manganese-based layered cathode materials prepared in Example 1 and Comparative Examples 1 and 2.
FIG. 6 is a graph showing cycle performance of the lithium-ion secondary batteries including the lithium-rich manganese-based layered cathode materials prepared in Example 1 and Comparative Examples 1 and 2.

### DETAILED DESCRIPTION

The present application will be described in detail with reference to the embodiments and accompanying drawings in order to provide a clearer and more detailed understanding of the objectives, technical solutions, and advantages of the present application. It should be understood that the specific embodiments described herein are only for the purpose of explaining the present application and are not intended to limit the present application.

Unless otherwise indicated, all technical and scientific terms used herein have the same meaning as those normally understood by those of ordinary skill in the art. The terms used herein in the specification of the present application are for the purpose of describing specific embodiments only and are not intended to limit the present application. The term "and/or" as used herein includes any and all combinations of one or more relevant listed items.

A first objective of the present invention is to provide a lithium-rich manganese-based cathode material. The surface of the lithium-rich manganese-based cathode material includes oxygen vacancies. The molecular formula of the lithium-rich manganese-based cathode material is Li₁₊ₐMn_{b}M_{c}O₂, wherein Mn includes Mn⁴⁺ and Mn³⁺, and a molar percentage of Mn³⁺ in Mn as a whole is in a range of 20% to 60%; M includes one or more of Ni, Co, Al, Mo, Ti, or Zr; 0<a≤0.25; b≥0.5; and 0.8≤a+b+c≤1.2.

Through research, it has been found that some oxygen ions can be released from the crystal lattice of a conventional lithium-rich manganese-based cathode material during the initial charging process, resulting in irreversible capacity, making the initial coulombic efficiency of the lithium-rich manganese-based cathode material relatively low. Additionally, the oxygen vacancies left after the release of the oxygen ions would lead to migration of transition metal ions, causing irreversible phase transition and voltage decay of the lithium-rich manganese-based cathode material. In the lithium-rich manganese-based cathode material provided above, oxygen vacancy defects are introduced into the surface of the material, and the self-regulation of oxygen vacancies can make Mn in the surface of the lithium-rich manganese-based cathode material exhibit a mixed valence state of +3 and +4, which is conducive to promoting charge transport and transfer on the surface of the lithium-rich manganese-based cathode material, enhancing the diffusion and reaction kinetics of lithium ions, and thus improving the rate performance of the lithium-rich manganese-based cathode material. Further, it is beneficial to improve the conductivity of the lithium-rich manganese-based cathode material by regulating the molar percentage of Mn³⁺ within the specific range.

In some embodiments, the molar percentage of Mn³⁺ can be any value between 20% and 60%, for example, 25%, 30%, 35%, 40%, 45%, or 50%. The self-regulation of oxygen vacancies can induce the molar percentage of Mn³⁺ of the material to be within the specific range of 20% to 60%, which is beneficial to improve the conductivity of the lithium-rich manganese-based cathode material and promoting charge transport and transfer on the surface of the material, enhancing the diffusion and reaction kinetics of lithium ions, and thus improving the rate performance of the lithium-rich manganese-based cathode material.

In some embodiments, the lithium-rich manganese-based cathode material is a layered material and includes a stacking-fault structure. The thickness of the stacking-fault structure is smaller than or equal to 50 nm. Specifically, the crystal structure of the lithium-rich manganese-based cathode material is a layered structure. Due to the introduction of oxygen vacancies, the system energy of the material is changed, and the layered arrangement of atoms and the stacking structure of crystal planes are disrupted. As a result, crystal defects are formed in the layered crystal structure, thereby forming a stacking-fault structure in a localized region of the normally layered crystal structure.

In some embodiments, the lithium-rich manganese-based cathode material satisfies at least one of the following conditions (1) to (3):
(1) the particle size D50 is in a range of 3 µm to 15 µm;
(2) the specific surface area is in a range of 0.3 m²/g to 6.0 m²/g; or
(3) the tap density is in a range of 1.5g/cm ³ to 2.8 g/cm ³.

In some embodiments, lithium-rich manganese-based cathode material particles (i.e., secondary particles) are formed by aggregation of primary particles, wherein the particle size D50 of the primary particles of the lithium-rich manganese-based cathode material is any value in a range of 50 nm to 500 nm.

A second objective of the present invention is to provide a method for preparing the above-described lithium-rich manganese-based cathode material. The method includes steps of S100 to S200.

The step of S100 is mixing a lithium source, a manganese source, an M source, and an organic material to prepare a mixed powder, wherein the organic material is adapted to provide a nitrogen source and/or a carbon source.

In some embodiments, the organic material includes, but is not limited to, one or more of sucrose, glucose, chitosan, urea, or citric acid.

In some embodiments, in the mixed powder, the mass percentage of the organic material can be any value between 0.5% and 10%, for example, 1%, 2%, 3%, 4%, 5%, 6%, 7%, 8%, or 9%.

In some embodiments, the lithium source is not limited and can be any lithium source known in the art, including but not limited to one or more of LiOH, Li₂CO₃, Li₂SO₄, LiCl, or LiNO₃.

It can be understood that the manganese source is not limited. For example, the manganese source can be selected from MnO, MnO₂, Mn₃O₄, MnCO₃, MnSO₄, and combinations thereof.

Similarly, those skilled in the art have the capability to choose the M source as needed, which, for example, can be one or more of an oxide, a hydroxide, a carbonate, or a sulfate, containing metal element M. Specifically, the M source can be one or more of nickel oxide, nickel hydroxide, nickel carbonate, nickel sulfate, cobalt oxide, cobalt hydroxide, cobalt carbonate, cobalt sulfate, aluminum trioxide, aluminum hydroxide, aluminum carbonate, aluminum sulfate, molybdenum oxide, molybdenum hydroxide, molybdenum carbonate, molybdenum sulfate, titanium oxide, titanium hydroxide , titanium sulfate, zirconium oxide, zirconium hydroxide, zirconium carbonate, or zirconium sulfate.

In some embodiments, the method adopted to prepare the mixed powder can be any mixing method known in the art, such as dry mixing or wet mixing. In the present invention, the mixing method can be specifically as follows.

The lithium source, the manganese source, the M source, and the organic material are dissolved in a solvent and then dried.

It can be understood that the solvent can be any commonly used solvent in the art, for example, an alcohol solvent and/or water, wherein the alcohol solvent can be methanol and/or ethanol.

Further, the mass ratio of the solvent to the total mass of the lithium source, the manganese source, the M source, and the organic material is in a range of 0.5:1 to 1.5:1.

In some embodiments, the drying method is not limited, and is preferably spray drying. More preferably, in the spray drying, the liquid inflow rate can be in a range of 0.5 L/min to 5 L/min, the air inlet temperature can be in a range of 150 °C to 300 °C, the air outlet temperature can be in a range of 80 °C to 200 °C, and the carrier gas flow rate can be in a range of 20 L/min to 200 L/min.

The step of S200 is sintering the mixed powder obtained in the step of S100 and then cooling.

In some embodiments, the sintering is staged sintering, and the specific process of the staged sintering is as follows.

In an oxygen-containing atmosphere, first control the air inflow rate to be in the range of 0.5 m³/h to 5 m³/h, raise the temperature at a heating rate ranging from 1.0 °C/min to 5.0 °C/min to a value ranging from 300 °C to 600 °C, and hold the temperature at this value for 2 h to 8 h; and then control the air inflow rate to be in the range of 0.5 m³/h to 5 m³/h, raise the temperature at a rate heating ranging from 1.0 °C/min to 5.0 °C/min to a value ranging from 800 °C to 1000 °C, and hold the temperature at this value for 10 h to 20 h.

In some embodiments, the cooling method is air cooling or liquid nitrogen quenching. By using the above cooling method, rapid cooling can be achieved, thereby ensuring the formation of well-defined oxygen vacancies.

Preferably, the air inflow rate of the air cooling can be any value ranging from 5 m³/h to 30 m³/h, for example, 10 m³/h, 12 m³/h, 15 m³/h, 20 m³/h, 25 m³/h, or 28 m³/h.

In the above-described method for preparing the lithium-rich manganese-based cathode material, the local oxygen partial pressures of the raw materials can be controlled during the sintering process due to different decomposition temperatures of the various organic materials and different gaseous products produced by the decomposition, and the temperature field can be coupled with the mixed gas atmosphere fluid field during the sintering by finely regulating the sintering process. As a result, oxygen vacancy defects can be introduced into the structure of the lithium-rich manganese-based cathode material. By further optimizing the cooling process after the sintering, the self-limited diffusion of vacancy defects in the surface can be induced, realizing the self-regulation of oxygen vacancies, including the quantity of oxygen vacancies and the thickness of the stacking-fault, in the lithium-rich manganese-based cathode material. This improves the surface and interface stability of the lithium-rich manganese-based cathode material, increases the initial coulombic efficiency, and suppresses the voltage decay during battery cycling.

A third objective of the present invention is to provide a positive electrode. The positive electrode includes a positive electrode current collector and a cathode active material layer disposed on one or both sides of the positive electrode current collector. The cathode active material in the cathode active material layer is the above-described lithium-rich manganese-based cathode material.

A fourth objective of the present invention is to provide a lithium-ion secondary battery, including the above-described positive electrode.

A fifth objective of the present invention is to provide an electrical device, including the above-described lithium secondary battery.

The present invention will be further described in detail below with reference to specific examples and comparative examples.

### Example 1

1) 530 g of lithium hydroxide (LiOH·H₂O), 458 g of trimanganese tetraoxide (Mn₃O₄), 92 g of nickel hydroxide (Ni(OH)₂), 93 g of cobalt hydroxide (Co(OH)₂), 59 g of glucose, 3.2 g of aluminum trioxide (Al₂O₃), and 2.8 g of zirconium dioxide (ZrO₂) were introduced to 1000 mL of deionized water, stirred and mixed evenly to obtain a first mixture.
2) The first mixture prepared in step 1) was pumped into a spray drying device through a peristaltic pump. The liquid inflow rate was set to 0.8 L/min, the air inlet temperature of the spray drying was set to 250 °C, the air outlet temperature was set to 120 °C, and the carrier gas flow rate was set to 50 L/min. The liquid was evaporated from the first mixture, thereby obtaining powder in which metal ions were uniformly mixed.
3) The powder obtained in step 2) was placed in an air atmosphere furnace for sintering. The sintering process was as follows. First, the temperature was increased to 450 °C at a heating rate of 3 °C/min, and the powder was sintered for 4 h at this temperature, during which the air inflow rate was 3 m³/h. Then, the temperature was increased to 900 °C at a heating rate of 3 °C/min, and the powder was sintered for 12 h at this temperature, during which the air inflow rate was 2 m³/h. Then, air was continued to be introduced into the air atmosphere furnace for air cooling, during which the air inflow rate was 10 m³/h. The product was then crushed and sieved to obtain an oxygen vacancy self-regulated lithium-rich manganese-based layered cathode material (Li_{1.2}Mn_{0.6}Ni_{0.1}Co_{0.1}O₂), wherein the thickness of the stacking-fault is 4 nm. In step 1), the lithium hydroxide was excess by 5 wt.%, which can compensate for the volatilization loss of lithium during the high-temperature sintering.

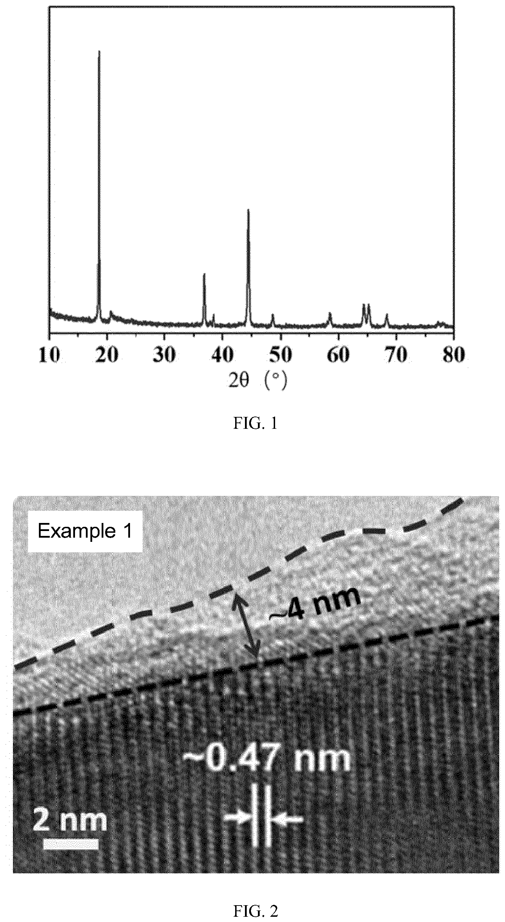

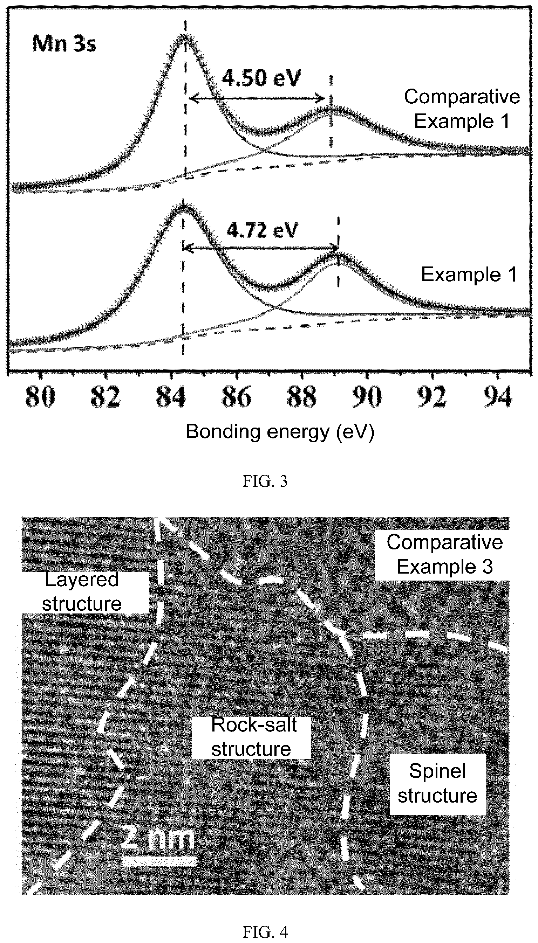

The measured XRD pattern of the lithium-rich manganese-based layered cathode material is shown in FIG. 1. As can be seen from FIG. 1, except for the weak diffraction peak located between 20° and 25°, which can be attributed to the structure of Li₂MnO₃ belonging to the C2/m space group, the other diffraction peaks can correspond to the hexagonal layered structure. The introduction of oxygen vacancies does not change the bulk structural characteristics of the lithium-rich manganese-based layered cathode material. In addition, I₍₀₀₃₎/I₍₁₀₄₎>1.2, indicating a relatively low degree of mixed arrangement of Li⁺/Ni²⁺. As can be seen from FIG. 2, the surface of the lithium-rich manganese-based layered cathode material exhibits localized structural stacking-fault caused by the introduction of the oxygen vacancy defects, and the thickness of the stacking-fault is about 4 nm. It can be seen from FIG. 3 that as there is a linear relationship between the valence state of Mn and the double-peak splitting energy of Mn 3s, i.e., O_{Mn}=9.67-1.27ΔE₃ₛ, the ΔE₃ₛ of the prepared lithium-rich manganese-based layered cathode material is 4.73 eV. That is, the average valence state of Mn in the lithium-rich manganese-based layered cathode material is +3.66, indicating a relatively high proportion (about 32.5%) of Mn³⁺ in the Mn elements due to the oxygen vacancies in the surface of the lithium-rich manganese-based layered cathode material. This highly mixed valence state is beneficial to improving the electronic conductivity of the lithium-rich manganese-based layered cathode material.

### Example 2

1) 466 g of lithium carbonate (Li₂CO₃), 632 g of manganese carbonate (MnCO₃), 184 g of nickel hydroxide (Ni(OH)₂), 310 g of cobalt sulfate (CoSO₄), 48 g of sucrose, 2.2 g of aluminum trioxide (Al₂O₃), 4.5 g of molybdenum trioxide (MoO₃), and 2.5 g of titanium dioxide (TiO₂) were introduced to 1300 mL of ethanol, stirred and mixed evenly to obtain a first mixture.
2) The first mixture prepared in step 1) was pumped into a spray drying device through a peristaltic pump. The liquid inflow rate was set to 1 L/min, the air inlet temperature of the spray drying was set to 220 °C, the air outlet temperature was set to 100 °C, and the carrier gas flow rate was set to 150 L/min. The liquid was evaporated from the first mixture, thereby obtaining powder in which metal ions were uniformly mixed.
3) The powder obtained in step 2) was placed in an air atmosphere furnace for sintering. The sintering process was as follows. First, the temperature was increased to 400 °C at a heating rate of 2.5 °C/min, and the powder was sintered for 6 h at this temperature, during which the air inflow rate was 6 m³/h. Then, the temperature was increased to 920 °C at a heating rate of 2.5 °C/min, and the powder was sintered for 10 h at this temperature, during which the air inflow rate was 3 m³/h. Then, air was continued to be introduced into the air atmosphere furnace for air cooling, during which the air inflow rate was 15 m³/h. The product was then crushed and sieved to obtain an oxygen vacancy self-regulated lithium-rich manganese-based layered cathode material (Li_{1.1}Mn_{0.55}Ni_{0.2}Co_{0.2}O₂), wherein the thickness of the stacking-fault is 10 nm. In step 1), the lithium carbonate was excess by 5 wt.%, which can compensate for the volatilization loss of lithium during the high-temperature sintering. The proportion of Mn³⁺ in the Mn elements of the lithium-rich manganese-based layered cathode material is approximately 36.8%.

### Example 3

1) 466 g of lithium carbonate (Li₂CO₃), 522 g of manganese dioxide (MnO₂), 308 g of nickel sulfate (NiSO₄), 26 g of chitosan, 5.0 g of molybdenum trioxide (MoO₃), and 3.0 g of zirconium dioxide (ZrO₂) were introduced to 1350 mL of ethanol, stirred and mixed evenly to obtain a first mixture.
2) The first mixture prepared in step 1) was pumped into a spray drying device through a peristaltic pump. The liquid inflow rate was set to 0.8 L/min, the air inlet temperature of the spray drying was set to 200 °C, the air outlet temperature was set to 80 °C, and the carrier gas flow rate was set to 80 L/min. The liquid was evaporated from the first mixture, thereby obtaining powder in which metal ions were uniformly mixed.
3) The powder obtained in step 2) was placed in an air atmosphere furnace for sintering. The sintering process was as follows. First, the temperature was increased to 500 °C at a heating rate of 4 °C/min, and the powder was sintered for 3 h at this temperature, during which the air inflow rate was 2 m³/h. Then, the temperature was increased to 940 °C at a heating rate of 4 °C/min, and the powder was sintered for 10 h at this temperature, during which the air inflow rate was 3 m³/h. Then, air was continued to be introduced into the air atmosphere furnace for air cooling, during which the air inflow rate was 12 m³/h. The product was then crushed and sieved to obtain an oxygen vacancy self-regulated lithium-rich manganese-based layered cathode material (Li_{1.2}Mn_{0.6}Ni_{0.2}O₂), wherein the thickness of the stacking-fault is 8 nm. In step 1), the lithium carbonate was excess by 5 wt.%, which can compensate for the volatilization loss of lithium during the high-temperature sintering. The proportion of Mn³⁺ in the Mn elements of the lithium-rich manganese-based layered cathode material is approximately 30.5%.

### Example 4

1) 664 g of lithium sulfate (Li₂SO₄), 845 g of manganese sulfate (MnSO₄), 177 g of nickel oxide (NiO), 169 g of glucose, 2.4 g of zirconium dioxide (ZrO₂), 3.6 g of titanium dioxide (TiO₂) were introduced to 2250 mL of deionized water, stirred and mixed evenly to obtain a first mixture.
2) The first mixture prepared in step 1) was pumped into a spray drying device through a peristaltic pump. The liquid inflow rate was set to 3 L/min, the air inlet temperature of the spray drying was set to 280 °C, the air outlet temperature was set to 120 °C, and the carrier gas flow rate was set to 180 L/min. The liquid was evaporated from the first mixture, thereby obtaining powder in which metal ions were uniformly mixed.
3) The powder obtained in step 2) was placed in an air atmosphere furnace for sintering. The sintering process was as follows. First, the temperature was increased to 450 °C at a heating rate of 5 °C/min, and the powder was sintered for 6 h at this temperature, during which the air inflow rate was 4 m³/h. Then, the temperature was increased to 880 °C at a heating rate of 5 °C/min, and the powder was sintered for 16 h at this temperature, during which the air inflow rate was 5 m³/h. Then, air was continued to be introduced into the air atmosphere furnace for air cooling, during which the air inflow rate was 25 m³/h. The product was then crushed and sieved to obtain an oxygen vacancy self-regulated lithium-rich manganese-based layered cathode material (Li_{1.15}Mn_{0.56}Ni_{0.24}O₂), wherein the thickness of the stacking-fault is 12 nm. In step 1), the lithium sulfate was excess by 5 wt.%, which can compensate for the volatilization loss of lithium during the high-temperature sintering. The proportion of Mn³⁺ in the Mn elements of the lithium-rich manganese-based layered cathode material is approximately 36.2%.

### Example 5

1) 529 g of lithium chloride (LiCl), 397 g of manganous oxide (MnO), 110 g of nickel hydroxide (Ni(OH)₂), 110 g of cobalt oxyhydroxide (CoOOH), 46 g of citric acid, 1.2 g of aluminum hydroxide (Al(OH)₃), and 4.0 g of zirconium dioxide (ZrO₂) were introduced to 1400 mL of methanol, stirred and mixed evenly to obtain a first mixture.
2) The first mixture prepared in step 1) was pumped into a spray drying device through a peristaltic pump. The liquid inflow rate was set to 1 L/min, the air inlet temperature of the spray drying was set to 240 °C, the air outlet temperature was set to 160 °C, and the carrier gas flow rate was set to 150 L/min. The liquid was evaporated from the first mixture, thereby obtaining powder in which metal ions were uniformly mixed.
3) The powder obtained in step 2) was placed in an air atmosphere furnace for sintering. The sintering process was as follows. First, the temperature was increased to 350 °C at a heating rate of 2 °C/min, and the powder was sintered for 8 h at this temperature, during which the air inflow rate was 4.5 m³/h. Then, the temperature was increased to 850 °C at a heating rate of 2 °C/min, and the powder was sintered for 20 h at this temperature, during which the air inflow rate was 5 m³/h. Then, air was continued to be introduced into the air atmosphere furnace for air cooling, during which the air inflow rate was 20 m³/h. The product was then crushed and sieved to obtain an oxygen vacancy self-regulated lithium-rich manganese-based layered cathode material (Li_{1.2}Mn_{0.56}Ni_{0.12}Co_{0.12}O₂), wherein the thickness of the stacking-fault is 23 nm. In step 1), the lithium chloride was excess by 5 wt.%, which can compensate for the volatilization loss of lithium during the high-temperature sintering. The proportion of Mn³⁺ in the Mn elements of the lithium-rich manganese-based layered cathode material is approximately 40.2%.

### Example 6

1) 466 g of lithium carbonate (Li₂CO₃), 435 g of manganese dioxide (MnO₂), 186 g of cobalt hydroxide (Co(OH)₂), 11 g of urea, 51 g of aluminum trioxide (Al₂O₃), 4.5 g of molybdenum trioxide (MoOs), and 2.4 g of titanium dioxide (TiO₂) were introduced to 1450 mL of methanol, stirred and mixed evenly to obtain a first mixture.
2) The first mixture prepared in step 1) was pumped into a spray drying device through a peristaltic pump. The liquid inflow rate was set to 0.8 L/min, the air inlet temperature of the spray drying was set to 300 °C, the air outlet temperature was set to 100 °C, and the carrier gas flow rate was set to 30 L/min. The liquid was evaporated from the first mixture, thereby obtaining powder in which metal ions were uniformly mixed.
3) The powder obtained in step 2) was placed in an air atmosphere furnace for sintering. The sintering process was as follows. First, the temperature was increased to 550 °C at a heating rate of 3.5 °C/min, and the powder was sintered for 4 h at this temperature, during which the air inflow rate was 1.5 m³/h. Then, the temperature was increased to 900 °C at a heating rate of 3.5 °C/min, and the powder was sintered for 14 h at this temperature, during which the air inflow rate was 0.5 m³/h. Then, liquid nitrogen quenching was performed. The product was then crushed and sieved to obtain an oxygen vacancy self-regulated lithium-rich manganese-based layered cathode material (Li_{1.2}Mn_{0.5}Co_{0.2}Al_{0.1}O₂), wherein the thickness of the stacking-fault is 18 nm. In step 1), the lithium carbonate was excess by 5 wt.%, which can compensate for the volatilization loss of lithium during the high-temperature sintering. The proportion of Mn³⁺ in the Mn elements of the lithium-rich manganese-based layered cathode material is approximately 30.6%.

### Comparative Example 1

The preparation method of Comparative Example 1 is substantially the same as that of Example 1, except that no organic material was added. Specific steps are as follows.
1) 530 g of lithium hydroxide (LiOH·H₂O), 458 g of trimanganese tetraoxide (Mn₃O₄), 92 g of nickel hydroxide (Ni(OH)₂), 93 g of cobalt hydroxide (Co(OH)₂), 3.2 g of aluminum trioxide (Al₂O₃), and 2.8 g of zirconium dioxide (ZrO₂) were introduced to 1000 mL of deionized water, stirred and mixed evenly to obtain a first mixture.
2) The first mixture prepared in step 1) was pumped into a spray drying device through a peristaltic pump. The liquid inflow rate was set to 0.8 L/min, the air inlet temperature of the spray drying was set to 250 °C, the air outlet temperature was set to 120 °C, and the carrier gas flow rate was set to 50 L/min. The liquid was evaporated from the first mixture, thereby obtaining powder in which metal ions were uniformly mixed.
3) The powder obtained in step 2) was placed in an air atmosphere furnace for sintering. The sintering process was as follows. First, the temperature was increased to 450 °C at a heating rate of 3 °C/min, and the powder was sintered for 4 h at this temperature, during which the air inflow rate was 3 m³/h. Then, the temperature was increased to 900 °C at a heating rate of 3 °C/min, and the powder was sintered for 12 h at this temperature, during which the air inflow rate was 2 m³/h. Then, air was continued to be introduced into the air atmosphere furnace for air cooling, during which the air inflow rate was 10 m³/h. The product was then crushed and sieved to obtain a lithium-rich manganese-based layered cathode material (Li_{1.2}Mn_{0.6}Ni_{0.1}Co_{0.1}O₂). In step 1), the lithium hydroxide was excess by 5 wt.%, which can compensate for the volatilization loss of lithium during the high-temperature sintering. It can be seen from FIG. 3 that as there is a linear relationship between the valence state of Mn and the double-peak splitting energy of Mn 3s, i.e., O_{Mn}=9.67-1.27ΔE₃ₛ, the ΔE₃ₛ of the prepared lithium-rich manganese-based layered cathode material is 4.50 eV. That is, the average valence state of Mn in the lithium-rich manganese-based layered cathode material is +3.96, indicating that due to the absence of oxygen vacancy in the surface of the lithium-rich manganese-based layered cathode material, the proportion of Mn³⁺ in the Mn elements is relatively low(about 4%), and the electronic conductivity of the lithium-rich manganese cathode material is low.

### Comparative Example 2

The preparation method of Comparative Example 2 involves acid etching to form oxygen vacancies. Specific steps are as follows.
1) According to the molar ratio of Mn:Ni:Co being 6:1:1, 245.2 g of manganese acetate tetrahydrate, 41.6 g of cobalt acetate tetrahydrate, and 41.6 g of nickel acetate tetrahydrate were dissolved in 4 L of ethylene glycol solution to obtain a first metal salt solution with a molar concentration of 2 mol /L.
2) 350 g of ammonium bicarbonate was dissolved in a mixture of 2.5 L of water and polyethylene glycol 400 (at a volume ratio of 1:1) to obtain a second solution. Under magnetic stirring, the second solution was pumped into the first metal salt solution prepared in step 1). Then, the mixed solution was placed in a high-pressure reactor at 180°C for 10 h, then cooled and centrifuged to obtain a precipitate.
3) The precipitate obtained in step 2) was placed into a muffle furnace and kept at 500°C for 5 h to prepare a precursor of a lithium-rich manganese-based material. The precursor was mixed with lithium hydroxide in a molar ratio of the metal elements in the precursor to the lithium hydroxide being 1:1.06. The mixture was ground evenly and heated to 800°C for 12 hours at a heating rate of 3°C/min in a muffle furnace. The product cooled to room temperature was taken out from the muffle furnace, thereby obtaining a pre-modified lithium-rich manganese-based material.
4) 50 g of the pre-modified lithium-rich manganese-based material prepared in step 3) was dissolved in an oxalic acid solution with a concentration of 0.02 mol/L, and stirred for 30 min. The filtered and dried material was placed in a muffle furnace and heated at 500°C for 5 h, thereby obtaining an acid-modified lithium-rich manganese-based layered cathode material (Li_{1.2}Mn_{0.6}Ni_{0.1}Co_{0.1}O₂).

### Comparative example 3

The preparation method of Comparative Example 3 is substantially the same as that of Example 1, except that the mass percentage of organic material is 15%. Specific steps are as follows.
1) 530 g of lithium hydroxide (LiOH·H₂O), 458 g of trimanganese tetraoxide (Mn₃O₄), 92 g of nickel hydroxide (Ni(OH)₂), 93 g of cobalt hydroxide (Co(OH)₂), 177 g of glucose, 3.2 g of aluminum trioxide (Al₂O₃), and 2.8 g of zirconium dioxide (ZrO₂) were introduced to 1000 mL of deionized water, stirred and mixed evenly to obtain a first mixture.
2) The first mixture prepared in step 1) was pumped into a spray drying device through a peristaltic pump. The liquid inflow rate was set to 0.8 L/min, the air inlet temperature of the spray drying was set to 250 °C, the air outlet temperature was set to 120 °C, and the carrier gas flow rate was set to 50 L/min. The liquid was evaporated from the first mixture, thereby obtaining powder in which metal ions were uniformly mixed.
3) The powder obtained in step 2) was placed in an air atmosphere furnace for sintering. The sintering process was as follows. First, the temperature was increased to 450 °C at a heating rate of 3 °C/min, and the powder was sintered for 4 h at this temperature, during which the air inflow rate was 3 m³/h. Then, the temperature was increased to 900 °C at a heating rate of 3 °C/min, and the powder was sintered for 12 h at this temperature, during which the air inflow rate was 2 m³/h. Then, air was continued to be introduced into the air atmosphere furnace for air cooling, during which the air inflow rate was 10 m³/h. The product was then crushed and sieved to obtain a lithium-rich manganese-based layered cathode material (Li_{1.2}Mn_{0.6}Ni_{0.1}Co_{0.1}O₂). In step 1), the lithium hydroxide was excess by 5 wt.%, which can compensate for the volatilization loss of lithium during the high-temperature sintering.

The TEM image of the lithium-rich manganese-based layered cathode material is shown in FIG. 4. As can be seen from FIG. 4, a spinel structure and an electrochemically inert rock-salt structure appear on the surface of the above-prepared lithium-rich manganese-based layered cathode material. The proportion of Mn³⁺ in the Mn elements is overly high (about 60.4%), and the lithium-ion diffusion is inhibited in the lithium-rich manganese-based layered cathode material.

The lithium-rich manganese-based layered cathode materials prepared in Examples 1 to 6 and Comparative Examples 1 to 3 were assembled into button-type lithium-ion secondary batteries according to the following method for testing the electrochemical performance of the lithium-rich manganese-based layered cathode materials. The specific preparation steps are as follows.

The lithium-rich manganese-based layered cathode material powder prepared in Examples 1 to 6 and Comparative Examples 1 to 3 were each mixed with acetylene black and polyvinylidene fluoride (at a mass ratio of 90:6:4), added with an appropriate amount of N-methyl pyrrolidone as a dispersant, and ground into a slurry. The slurry was evenly coated on an aluminum foil, and vacuum dried at 120°C for 10 h. The dried electrode plate was rolled by using a roller machine and sliced into circular electrode pieces with a diameter of 1.3 cm by using a slicer. The amount of the lithium-rich manganese-based layered cathode material loaded on the circular electrode piece was controlled to be about 10 mg/cm². Half-cells were assembled in an argon atmosphere glove box, in which the partial pressure of water is smaller than or equal to 0.1 ppm and the partial pressure of oxygen is smaller than or equal to 0.1 ppm. CR2032 button-type lithium-ion secondary batteries were assembled with lithium metal as the counter electrode and 1 M LiPF₆ solution (FEC/EC/DMC at a volume ratio of 1:1:1) as the electrolyte. The batteries were galvanostatically charged and discharged within the voltage range of 2.0V to 4.65V at a current density of 50 mA/g (0.2 C rate) and at room temperature for 100 cycles. The lithium-ion diffusion coefficients of different lithium-rich manganese-based layered cathode materials were measured and compared through electrochemical impedance spectroscopy (EIS) test. The frequency range of the test was 100 kHz to 0.01 Hz. The rate performances of the batteries were respectively tested at current densities of 50 mA/g, 500 mA/g, 1250 mA/g and 2500 mA/g, respectively corresponding to 0.2 C, 2 C, 5 C, and 10 C.

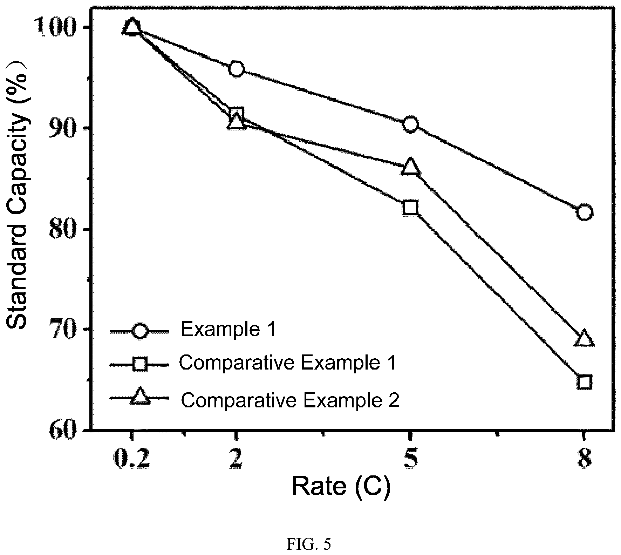

The test results of the rate performance of the CR2032 button-type lithium-ion secondary batteries formed by using the lithium-rich manganese-based layered cathode materials prepared in Example 1 and Comparative Examples 1 and 2 are shown in FIG. 5.

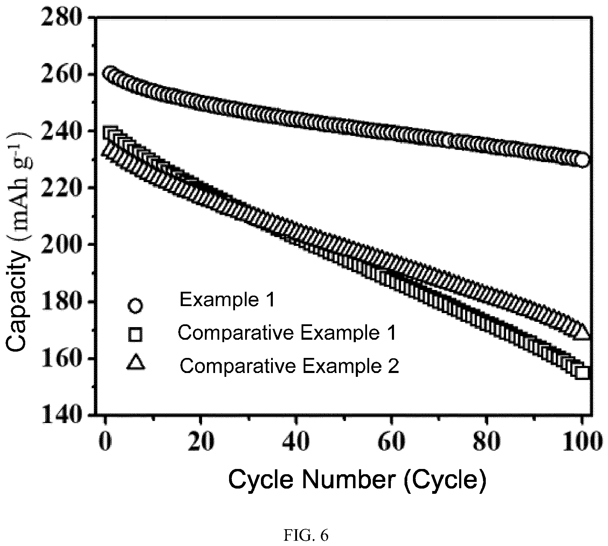

The test results of the cycle performance of the CR2032 button-type lithium-ion secondary batteries formed by using the lithium-rich manganese-based layered cathode materials prepared in Example 1 and Comparative Examples 1 and 2 are shown in FIG. 6.

The charge specific capacities at 1^{st} cycle, discharge specific capacities at 1^{st} cycle, coulombic efficiencies at 1^{st} cycle, capacity retentions after 100 cycles, discharge voltage decays in 100 cycles, and lithium-ion diffusion coefficients of the above-described CR2032 button-type lithium-ion secondary batteries are shown in Table 1.

**Table 1**

| | Charge specific capacity at 1^{st} cycle (mAh/g) | Discharge specific capacity at 1^{st} cycle (mAh/g) | Coulombic efficiency at 1^{st} cycle (%) | Capacity retention after 100 cycles (%) | Discharge voltage decay in 100 cycles (mV) | Lithium-ion diffusion coefficient (cm²/s) |
|---|---|---|---|---|---|---|
| Example 1 | 285.8 | 260.4 | 91.1 | 88.3 | 255 | 5.2×10⁻¹¹ |
| Example 2 | 289.4 | 259.9 | 89.8 | 86.1 | 276 | 4.9×10⁻¹¹ |
| Example 3 | 280.2 | 250.5 | 89.4 | 84.8 | 265 | 1.5×10⁻¹¹ |
| Example 4 | 274.1 | 247.2 | 90.2 | 87.8 | 282 | 93×10⁻¹¹ |
| Example 5 | 282.9 | 258.6 | 91.4 | 89.1 | 264 | 4.4×10⁻¹¹ |
| Example 6 | 279.0 | 251.1 | 90.0 | 86.2 | 275 | 8.8×10⁻¹² |
| Comparative Example 1 | 297.2 | 239.6 | 80.6 | 64.7 | 510 | 6.9×10⁻¹⁴ |
| Comparative Example 2 | 280.4 | 233.3 | 83.2 | 72.3 | 485 | 1.2×10⁻¹³ |
| Comparative Example 3 | 271.0 | 194.1 | 71.6 | 67.0 | 492 | 8.2×10⁻¹⁵ |

The rate performances of the above-described CR2032 button-type lithium-ion secondary batteries are shown in Table 2.

**Table 2**

| | 0.2 C Discharge specific capacity (mAh/g) | 2 C Discharge specific capacity (mAh/g) | 5 C Discharge specific capacity (mAh/g) | 8 C Discharge specific capacity (mAh/g) |
|---|---|---|---|---|
| Example 1 | 260.5 | 249.9 | 235.6 | 212.8 |
| Example 2 | 261.2 | 247 | 231.2 | 210.1 |
| Example 3 | 251.5 | 240.9 | 232.6 | 216.5 |
| Example 4 | 247.6 | 233.1 | 225.5 | 217.5 |
| Example 5 | 257.8 | 248.1 | 231 | 212.3 |
| Example 6 | 250.3 | 242.5 | 224.9 | 208.6 |
| Comparative Example 1 | 240.6 | 219.9 | 197.7 | 156 |
| Comparative Example 2 | 232.5 | 210.5 | 200.1 | 160.4 |
| Comparative Example 3 | 196.0 | 209.2 | 190.8 | 147.3 |

From the above test results, it can be seen that with respect to the lithium-rich manganese-based layered cathode material provided by the present invention, by introducing the organic material during the preparation process and controlling the proportion of the organic material, and further optimizing the sintering and cooling processes, the local oxygen partial pressure in the raw materials of the lithium-rich manganese-based layered cathode material can be accurately controlled during the sintering process. The local oxygen partial pressure induces the formation of oxygen vacancies at the surface of the lithium-rich manganese-based layered cathode material, and enables self-regulation of the quantity of the oxygen vacancies and the thickness of the stacking-fault. As a result, the lithium-rich manganese-based layered cathode material with self-regulated oxygen vacancies exhibits a relatively high coulombic efficiency at the first cycle, and even after 100 cycles, the capacity retention is still significantly higher than that of the lithium-rich manganese-based layered cathode materials prepared in the comparative examples, and the voltage decay is notably suppressed. In addition, the rate performance tests at different current densities ranging from 0.2 C to 8 C demonstrate that the lithium-rich manganese-based layered cathode material provided by the present invention maintains a discharge capacity retention (8 C discharge capacity / 0.2 C discharge capacity) of above 80% at a high discharge rate of 8 C, which is much higher than that of the lithium-rich manganese-based layered cathode material prepared in the comparative examples. From the lithium-ion diffusion coefficient obtained from the EIS test, it can be seen that the lithium-rich manganese-based layered cathode material provided by the present invention has a relatively high lithium-ion diffusion coefficient and exhibits relatively strong reaction kinetics.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A lithium-rich manganese-based cathode material, wherein a surface of the lithium-rich manganese-based cathode material comprises oxygen vacancies, and a molecular formula of the lithium-rich manganese-based cathode material is Li₁₊ₐMn_{b}M_{c}O₂, where Mn comprises Mn⁴⁺ and Mn³⁺, a molar percentage of Mn³⁺ in Mn as a whole is in a range of 20% to 60%, M comprises one or more of Ni, Co, Al, Mo, Ti, or Zr, 0<a≤0.25, b≥0.5, and 0.8≤a+b+c≤1.2.

2. The lithium-rich manganese-based cathode material according to claim 1, comprising a stacking-fault structure, wherein a thickness of the stacking-fault structure is less than or equal to 50 nm.

3. The lithium-rich manganese-based cathode material according to claim 1 or 2, satisfying at least one of following conditions (1) to (3):
(1) the particle size D50 is in a range of 3 µm to 15 µm;
(2) the specific surface area is in a range of 0.3 m²/g to 6.0 m²/g; or
(3) the tap density is in a range of 1.5g/cm ³ to 2.8 g/cm ³.

4. The lithium-rich manganese-based cathode material according to any one of claims 1 to 3, comprising secondary particles, wherein the secondary particles are formed by aggregation of primary particles of the lithium-rich manganese-based cathode material.

5. The lithium-rich manganese-based cathode material according to claim 4, wherein the particle size D50 of the primary particles of the lithium-rich manganese-based cathode material is in a range of 50 nm to 500 nm.

6. A method for preparing the lithium-rich manganese-based cathode material according to any one of claims 1 to 5, comprising following steps of
mixing a lithium source, a manganese source, an M source, and an organic material to prepare a mixed powder, wherein the organic material is adapted to provide a nitrogen source and/or a carbon source; and
sintering the mixed powder and then cooling.

7. The method according to claim 6, wherein the organic material comprises one or more of sucrose, glucose, chitosan, urea, or citric acid.

8. The method according to claim 6 or 7, wherein a mass percentage of the organic material in the mixed powder is in a range of 0.5 % to 10 %.

9. The method according to any one of claims 6 to 8, satisfying at least one of following features (1) to (3):
(1) the lithium source comprises one or more of LiOH, Li₂CO₃, Li₂SO₄, LiCl, or LiNO₃;
(2) the manganese source comprises one or more of MnO, MnO₂, Mn₃O₄, MnCO₃, or MnSO₄; or
(3) the M source is one or more of an oxide, a hydroxide, a carbonate, or a sulfate, containing metal element M.

10. The method according to any one of claims 6 to 9, wherein the M source is selected from the group consisting of nickel oxide, nickel hydroxide, nickel carbonate, nickel sulfate, cobalt oxide, cobalt hydroxide, cobalt carbonate, cobalt sulfate, aluminum trioxide, aluminum hydroxide, aluminum carbonate, aluminum sulfate, molybdenum oxide, molybdenum hydroxide, molybdenum carbonate , molybdenum sulfate, titanium oxide, titanium hydroxide , titanium sulfate, zirconium oxide, zirconium hydroxide, zirconium carbonate, zirconium sulfate, and combinations thereof.

11. The method according to any one of claims 6 to 10, wherein the step of sintering is performed by staged sintering comprising following steps of:
in an oxygen-containing atmosphere, controlling an air inflow rate to be in a range of 0.5 m³/h to 5 m³/h, raising the temperature at a heating rate ranging from 1.0 °C/min to 5.0 °C/min to a value ranging from 300 °C to 600 °C, and holding the temperature for 2 h to 8 h; and then controlling the air inflow rate to be in a range of 0.5 m³/h to 5 m³/h, raising the temperature at a heating rate ranging from 1.0 °C/min to 5.0 °C/min to a value ranging from 800 °C to 1000 °C, and holding the temperature for 10 h to 20 h.

12. The method according to any one of claims 6 to 11, wherein the step of cooling is performed by air cooling or liquid nitrogen quenching;
optionally, the air inflow rate of the air cooling is in a range of 5 m³/h to 30 m³/h.

13. The method according to any one of claims 6 to 12, wherein the step of preparing the mixed powder comprising a step of dissolving the lithium source, the manganese source, the M source, and the organic material in a solvent and then drying;
optionally, the step of drying is performed by spray drying, and in the spray drying, the liquid inflow rate is in a range of 0.5 L/min to 5 L/min, the air inlet temperature is in a range of 150 °C to 300 °C, the air outlet temperature is in a range of 80 °C to 200 °C, and the carrier gas flow rate is in a range of 20 L/min to 200 L/min.

14. A positive electrode, comprising a positive electrode current collector and a cathode active material layer disposed on one or both sides of the positive electrode current collector, wherein the cathode active material in the cathode active material layer comprises the lithium-rich manganese-based cathode material according to any one of claims 1 to 5.

15. A lithium secondary battery, comprising the positive electrode according to claim 14.

16. An electrical device, comprising the lithium secondary battery according to claim 15.
